**Europäisches Patentamt**

**European Patent Office**

**Office européen des brevets**

(19)

(11) Veröffentlichungsnummer : **0 351 579 B1**

(12)

# EUROPÄISCHE PATENTSCHRIFT

(45) Veröffentlichungstag der Patentschrift :
**22.04.92 Patentblatt 92/17**

(51) Int. Cl.$^5$ : **F16N 39/00,** F01M 5/00,
F16N 27/00

(21) Anmeldenummer : **89111434.0**

(22) Anmeldetag : **23.06.89**

(54) **Gerät zur Schmierstoffdosierung.**

(30) Priorität : **11.07.88 DE 8808882 U**

(43) Veröffentlichungstag der Anmeldung :
**24.01.90 Patentblatt 90/04**

(45) Bekanntmachung des Hinweises auf die
Patenterteilung :
**22.04.92 Patentblatt 92/17**

(84) Benannte Vertragsstaaten :
**AT BE CH DE ES FR GB GR IT LI LU NL SE**

(56) Entgegenhaltungen :
**DE-A- 2 018 776**
**DE-A- 3 339 016**
**DE-A- 3 637 851**
**DE-B- 1 033 469**

(73) Patentinhaber : **HYDAC TECHNOLOGY GMBH**
**Industriestrasse**
**W-6603 Sulzbach/Saar (DE)**

(72) Erfinder : **Scheuber, Harald, Dipl.-Ing.**
**Birkenallee 5**
**W-6823 Neulussheim (DE)**
Erfinder : **Walker, Robert M.**
**Im Birkenfeld 6**
**W-6602 Didweiler (DE)**
Erfinder : **Hornung, Dieter Dr.**
**Kantstrasse 11**
**W-6797 Waldmohr (DE)**
Erfinder : **Dyroff, Walter, Ing. (grad.)**
**Schieferweg 15**
**W-4837 Verl 1 (DE)**

(74) Vertreter : **Patentanwälte Phys. Bartels**
**Dipl.-Ing. Fink Dr.-Ing. Held**
**Lange Strasse 51**
**W-7000 Stuttgart 1 (DE)**

EP 0 351 579 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Gerät zur versorgungsdruck- und viskoseunabhängigen Schmierstoffdosierung, das die Merkmale des Oberbegriffes des Patentanspruches 1 aufweist.

Es gibt Maschinen oder dgl., wie z. B. Papiermaschinen, bei denen den Schmierstellen während des Anfahrbetriebes eine andere, versorgungsdruck- und viskoseunabhängige Schmiermittelmenge als während des Arbeitsbetriebes zugeführt werden muß. Den Zwei-Wege-Stromreglern, welche die Schmiermittelmenge versorgungsdruckunabhängig halten, sind deshalb zwei in Reihe geschaltete Festdrosseln vorgeschaltet. Eine erste Zuleitung führt dabei zur Eintrittsöffnung der die kleinere Öffnungsweite aufweisenden Drossel, eine zweite Zuleitung zu einem Verbindungskanal, welcher die Austrittsöffnung der Drossel mit der kleineren Öffnungsweite mit der Eintrittsöffnung der die größere Öffnungsweite aufweisenden Drossel verbindet. Über ein hydraulisch ansteuerbares Umsteuerventil läßt sich wahlweise die eine oder andere Zuleitung an die Versorgungsleitung anschließen.

Der das Umsteuerventil enthaltende Vorsteuerteil erhöht den Platzbedarf und Aufwand. Ferner sind ein zusätzliches Rohrleitungssystem für die Umsteuerventile sowie eine Pumpe für die Steuerhydraulik erforderlich. Weiterhin sind bei diesem bekannten Gerät mehrere Drosselpaare auf einer gemeinsamen Grundplatte angeordnet und an ein und dasselbe Umsteuerventil angeschlossen, wodurch sich die Schmiermittelmenge nur gruppenweise verändern läßt.

Von einem derartigen Gerät zur versorgungsdruckund viskoseunabhängigen Schmierstoffdosierung unterscheidet sich ein bekanntes Gerät der eingangs genannten Art (DE-A-36 37 851) nur dadurch, daß statt der zweiten Zuleitung ein Bypaß vor und hinter der Festdrossel mit der kleineren Öffnungsweite an die beiden Festdrosseln gemeinsame Zuleitung angeschlossen ist. Das hydraulisch ansteuerbare Umsteuerventil ist dabei im Bypaß angeordnet, um diesen freigeben und absperren zu können, je nachdem, ob die Festdrossel mit der kleineren Öffnungsweite unwirksam oder wirksam sein soll. Die Einlaßöffnung der Festdrossel mit der größeren Öffnungsweite steht deshalb entweder über den Bypaß oder über die andere Festdrossel mit dem Versorgungsanschluß in Verbindung.

Der Erfindung liegt die Aufgabe zugrunde, ein Gerät der eingangs genannten Art zu verbessern. Diese Aufgabe löst ein Gerät mit den Merkmalen des Anspruches 1.

Das erfindungsgemäße Gerät hat, da es keinen Vorsteuerteil benötigt, einen geringen Platzbedarf und kann, und zwar auch nachträglich, problemlos mit den bekannten Zwei-Wege-Stromreglern zu einer Baueinheit vereinigt werden. Dabei ist von besonderem Vorteil, daß in den meisten Fällen kein zusätzliches Rohrleitungssystem erforderlich ist, sondern nur eine elektrische Leitung zu einem die zweite Drossel verstellenden Elektromagneten geführt zu werden braucht, was eine Nachrüstung vereinfacht. Nur dann, wenn große Volumenströme gesteuert werden müssen, ist in der Regel ein hydraulischer oder pneumatischer Antrieb in Betracht zu ziehen. Selbstverständlich ist es auch möglich, den Antrieb von Hand, mit Hilfe eines Motors oder mittels eines geregelten Proportionalmagneten vorzunehmen, wobei zusätzlich ein Wegmeßsystem vorgesehen sein kann. Letzteres ist vor allem bei Verwendung einer Drossel mit veränderbarem freiem Querschnitt vorteilhaft. Schließlich ist es weder aus Kostengründen noch aus Platzgründen erforderlich, eine Gruppenansteuerung vorzusehen, was die Einsatzmöglichkeiten des erfindungsgemäßen Gerätes ebenfalls verbessert.

Die zweite Drossel ist bei einer vorteilhaften Ausführungsform ebenso wie die erste Drossel in Form einer Buchse ausgebildet, deren zentraler Durchgangskanal eine die Drosselstelle bildende Verengung aufweist. Die zweite Drossel braucht dann nur, um sie wirksam zu machen, aus einer Stellung, in der sie sich im Abstand von der ersten Drossel befindet, mit ihrem die Austrittsöffnung bildenden Ende in dichte Anlage an die Eintrittsöffnung der ersten Drossel bewegt zu werden.

Sehr vorteilhaft ist aber auch eine Ausbildung der zweiten Drossel in der Weise, daß eine Düsennadel in der wirksamen Stellung zusammen mit der Eintrittsöffnung der ersten Drossel die Drosselstelle bildet. In der unwirksamen Stellung ist die Düsennadel ausreichend weit weg von der Eintrittsöffnung der ersten Drossel, um den Eintritt von Schmieröl nicht zu behindern.

Um den Aufwand für den Verstellantrieb und die zu ihm führenden Leitungen möglichst gering zu halten, weist der Verstellantrieb bei einer bevorzugten Ausführungsform wenigstens eine Feder auf, welche im unaktivierten Zustand des Verstellantriebes die zweite Drossel in der einen Endstellung hält. Der Verstellantrieb braucht dann nur eine Betätigungskraft in der einen Richtung ausüben zu können.

Vorzugsweise ist der Körper der zweiten Drossel in einen kolbenartigen Träger gemäß Anspruch 7 eingesetzt.

Ferner ist es vorteilhaft, die beiden Drosseln gemäß Anspruch 9 anzuordnen, weil dann der Schmiermittelstrom auf kurzem Wege in die erste Drossel eintreten kann, sofern die zweite Drossel unwirksam gemacht ist, und bei wirksamer zweiter Drossel keine zusätzlichen Kanäle erforderlich sind, um das Schmiermittel zur Eintrittsöffnung der zweiten Drossel zu führen. Dies vereinfacht nicht nur die konstruktive Gestaltung des Gerätes, sondern reduziert auch dessen Raumbedarf.

Zweckmäßigerweise sind die Körper der beiden Drosseln auswechselbar in ihre Träger eingesetzt.

Im folgenden ist die Erfindung anhand von zwei in der Zeichnung dargestellten Ausführungsbeispielen im einzelnen erläutert. Es zeigen

Fig. 1 einen unvollständig dargestellten Längsschnitt des ersten Ausführungsbeispiels im Zustand der Wirksamkeit der Drossel mit der kleineren Öffnungsweite,

Fig. 2 einen Schnitt entsprechend Fig. 1 des ersten Ausführungsbeispiels im Zustand der Unwirksamkeit der Drosseln mit der kleineren Öffnungsweite,

Fig. 3 einen unvollständig dargestellten Schnitt entsprechend Fig. 1 des zweiten Ausführungsbeispiels.

Ein Gerät zur versorgungsdruckunabhängigen Schmiermitteldosierung weist einen in bekannter Weise ausgebildeten Zwei-Wege-Stromregler auf, dem eine erste Drossel 1 vorgeschaltet ist. Diese erste Drossel 1 weist einen zylindrischen Körper mit einer eine Verengung aufweisenden zentralen Durchgangsbohrung 2, einen Ringbund 1′ sowie im Anschluß an diesen je ein Außengewinde auf. Die Eintrittsöffnung der ersten Drossel 1 verjüngt sich konisch zu der Verengung hin. Diese erste Drossel 1 ist von der dem Zwei-Wege-Stromregler abgekehrten Seite her in eine zentrale Gewindebohrung einer Trennwand 3 eingeschraubt, die in einer Radialebene liegend im Inneren eines Hohlzylinders 4 angeordnet ist. Der Innendurchmesser des Hohlzylinders 4 ist wesentlich größer als, im Ausführungsbeispiel etwa doppelt so groß wie, der Außendurchmesser der ersten Drossel 1. Der an beiden Enden offene Hohlzylinder 4, dessen dem Zwei-Wege-Stromregler abgekehrter Endabschnitt einen vergrößerten Außendurchmesser hat, ist unter Zwischenlage einer Ringdichtung 5 in ein zylindrisches Gehäuse 6 eingesetzt, das seinerseits unter Zwischenlage einer Ringdichtung 7 in einer Bohrung einer Grundplatte 8 angeordnet ist. Das Gehäuse 6 ist ebenso wie der Hohlzylinder 4 an beiden Enden offen.

Die Trennwand 3 unterteilt den Innenraum des Hohlzylinders 4 in einen mit der Einlaßöffnung des Zwei-Wege-Stromreglers in Verbindung stehenden Raum 9 und einen Raum 10, von dem aus die erste Drossel 1 in die sie aufnehmende Gewindebohrung eingeschraubt ist.

Unmittelbar neben der Trennwand 3 mündet in den Raum 10 ein auch das Gehäuse 6 durchdringender Verbindungskanal 11, der zu einem Anschluß für die Versorgungsleitung führt.

Im Ausführungsbeispiel ist diametral zum Verbindungskanal 11 ein Verbindungskanal 14 vorgesehen, um weitere Geräte an die gemeinsame Versorgungsleitung anschließen zu können.

Vom offenen Ende des Raumes 10 her greift in diesen ein kolbenartiger Träger 12 für eine zweite Drossel 13 längsverschiebbar ein. Geführt ist dieser Träger 12 im Hohlzylinder 4 nur im Bereich von dessen im Außendurchmesser vergrößertem Abschnitt durch radial verlaufende Führungsrippen 15. Im übrigen ist zwischen der Außenmantelfläche des Trägers 12 und der Innenmantelfläche des Hohlzylinders 4 ein Ringraum 16 vorhanden, dessen Querschnittsfläche größer ist als der größte freie Drosselquerschnitt, im vorliegenden Fall also größer als der freie Querschnitt der ersten Drossel 1. Zu dem der Trennwand 3 abgekehrten Ende des Trägers 12 ist gleichachsig ein Stößel 17 angeordnet, der vom Anker eines nicht dargestellten Elektromagneten bei dessen Erregung gegen die Trennwand 3 hin bewegt wird und dabei den Träger 12 entgegen der Kraft von Druckfedern 18 mitnimmt. Im Ausführungsbeispiel greift der Stößel 17 in eine Sacklochbohrung des Trägers 12 ein. Die Druckfedern 18 sind zwischen den Führungsrippen 15 angeordnet und einerseits an einer Ringschulter des Hohlzylinders 4, andererseits an einer durch den flanschartig ausgebildeten Endabschnitt des Trägers 12 gebildeten Ringschulter abgestützt.

Von der der Trennwand 3 zugekehrten Stirnfläche her dringt in den Träger 12 eine zentrale Gewindebohrung 19 ein, in welche die zweite Drossel 13 eingeschraubt ist. An diese Gewindebohrung 19 schließt sich gleichachsig eine glatte Sacklochbohrung 20 an, welche von einer den Träger 12 in radialer Richtung vollständig durchdringenden Querbohrung 21 gekreuzt wird.

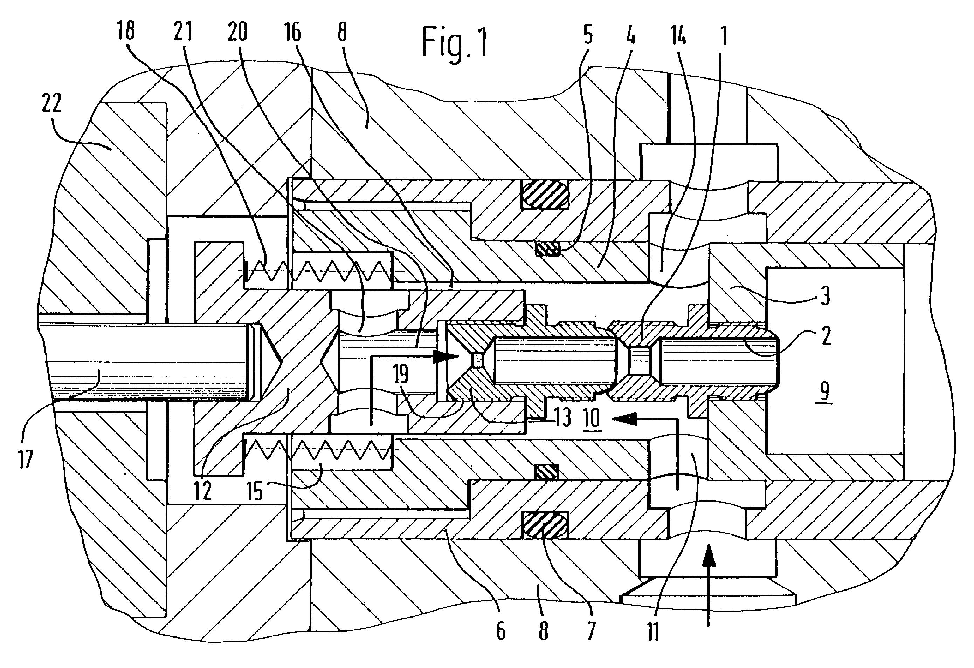

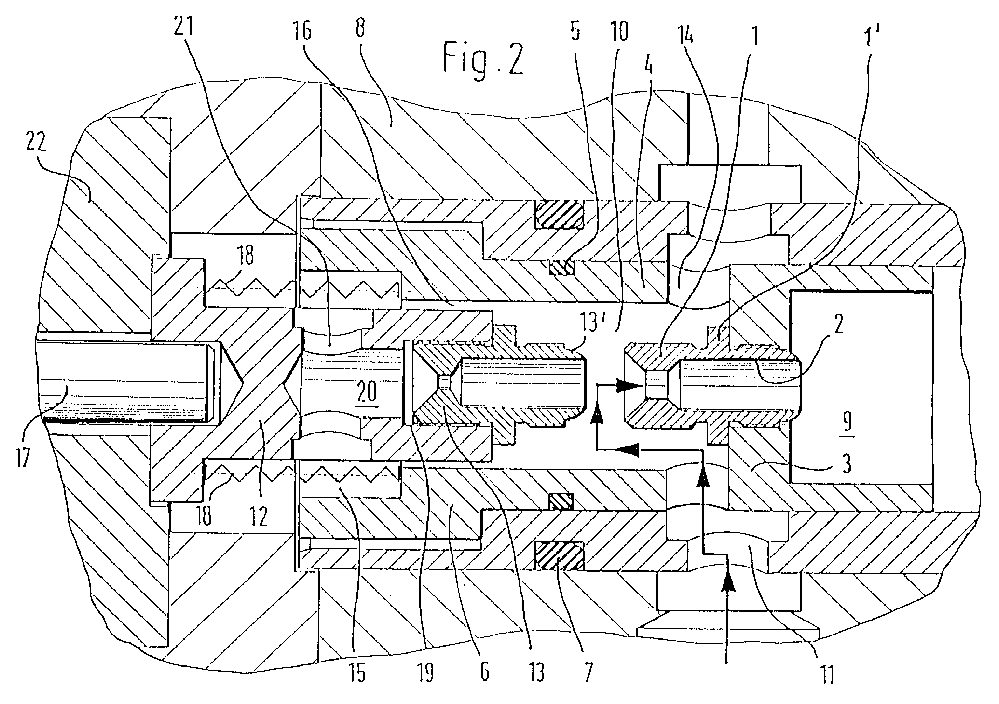

Die zweite Drossel 13 unterscheidet sich von der ersten Drossel 1 nur durch eine geringere Öffnungsweite der Verengung ihrer zentralen Durchgangsbohrung. Sie ist, wie die Fig. 1 und 2 zeigen, mit demjenigen Abschnitt bis zur Anlage an ihren Ringbund in die Gewindebohrung 19 eingeschraubt, welcher die Verengung enthält. Der über das Ende des Trägers 12 überstehende Endabschnitt 13′ verjüngt sich ballig zum freien Ende hin, wodurch ein gut dichtender Sitz gebildet wird, wenn, wie Fig. 1 zeigt, dieser Endabschnitt 13′ in die konische Eintrittsöffnung der ersten Drossel 1 eingreift und gegen die erste Drossel 1 gedrückt wird.

Wenn die Schmierstelle mit der kleineren der beiden einstellbaren Schmiermitteldosierungen versorgt werden muß, wird der nicht dargestellte Elektromagnet über die zu ihm führende elektrische Leitung erregt. Der Stößel 17 drückt dabei entgegen der Kraft der Druckfedern 18 den Endabschnitt 13′ der zweiten Drossel 13 in die konische Eintrittsöffnung der ersten Drossel 1. Das durch den Verbindungskanal 14 in den Raum 10 eintretende Schmiermittel strömt dann durch den Ringraum 16 hindurch in die Querbohrung 21. Von dort aus gelangt es durch die Sacklochbohrung 20 hindurch in den zentralen Längskanal der zweiten Drossel 13. Von hier aus strömt es durch den zentralen Längskanal 2 der ersten Drossel 1 und dann durch den Raum 9 hindurch zum Zwei-Wege-Stromregler , welcher den Schmiermittelstrom unabhängig vom Versorgungsdruck konstant hält.

Sobald die höhere Dosierung benötigt wird, wird der Elektromagnet entregt. Die vorgespannten Druckfedern 18 bewegen nun den Träger 12 und mit ihm die zweite Drossel 13 von der Trennwand 3 weg bis zur Anlage des Trägers 12 an einem Deckel 22. Nunmehr kann, wie durch die Pfeile in Fig. 2 angedeutet, das Schmiermittel vom Raum 10 aus direkt in die Eintrittsöffnung der ersten Drossel 1 eintreten, weshalb nur noch die erste Drossel 1 wirksam ist.

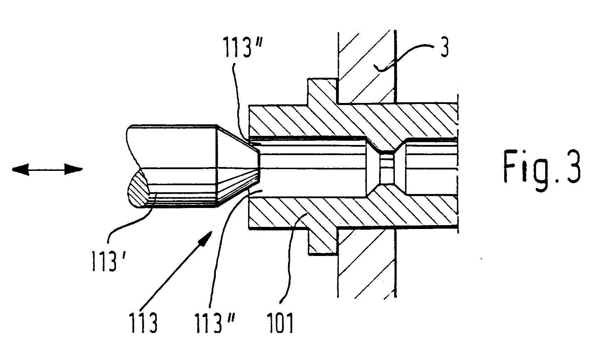

Wie Fig. 3 zeigt, kann die zweite Drossel 113 auch mit Hilfe einer gleichachsig zur ersten Drossel 101, welche wie die erste Drossel 1 des ersten Ausführungsbeispiels ausgebildet ist, angeordnete Düsennadel 113′ realisiert werden, welche in ihrer Längsrichtung mittels des Verstellantriebs verschiebbar ist. Die Düsennadel 113′ ist deshalb mit ihrem der ersten Drossel 101 abgekehrten Ende lösbar mit dem nur in den Fig. 1 und 2 dargestellten Träger 12 verbunden. Das sich konisch verjüngende Ende der Düsennadel 113′ greift im wirksamen Zustand der zweiten Drossel 113 in die Eintrittsöffnung der ersten Drossel 101 ein und bildet einen als Drosselstelle dienenden Ringspalt 113″. In der unwirksamen Stellung der zweiten Drossel 113 ist die Düsennadel 113′ so weit zurückgezogen, daß sie den Eintritt des Schmiermittels in die Eintrittsöffnung der ersten Drossel 101 nicht behindert.

## Patentansprüche

1. Gerät zur versorgungsdruck- und viskoseunabhängigen Schmiermitteldosierung mit einem Zwei-Wege-Stromregler und wenigstens zwei diesem zugeordneten Drosseln (1, 13; 101; 113) unterschiedlicher Öffnungsweite, von denen diejenige (1.3; 113) mit der geringeren Öffnungsweite in Reihe mit der die größere Öffnungsweite aufweisenden Drossel (1; 101) mittels eines Verstellantriebes (17, 18) schaltbar ist, wobei die Drossel (1; 101) mit der größten Öffnungsweite in einem Gehäuse (3, 6) derart angeordnet ist, daß sie die Einlaßöffnung des Zwei-Wege-Stromreglers mit einem Raum (10) verbindet, von dem ein Verbindungskanal (11) zu einem Versorgungsanschluß führt, und die Eintrittsöffnung der Drossel (13; 113) geringerer Öffnungsweite ebenfalls mit dem Versorgungsanschluß in Verbindung steht, dadurch gekennzeichnet, daß

a) die Eintrittsöffnung der die geringere Öffnungsweite aufweisenden, zweiten Drossel (13; 113) mit dem Raum (10) in Verbindung steht,

b) die zweite Drossel (13; 113) einen mittels des Verstellantriebes (17, 18) relativ zur ersten Drossel (1; 101) gegen deren Einlaßöffnung hin und von dieser wegbewegbaren Körper (13; 113′) aufweist und

c) in einer Stellung des Körpers (13; 113′), in welcher die zweite Drossel (13; 113) unwirksam ist, die Einlaßöffnung der ersten Drossel (1; 101) direkt mit dem Raum (10) und in einer Stellung, in der die zweite Drossel (13; 113) wirksam ist, die Einlaßöffnung der ersten Drossel (1; 101) über die zweite Drossel (13; 113) mit dem Raum (10) in Verbindung steht.

2. Gerät nach Anspruch 1, dadurch gekennzeichnet, daß als Verstellantrieb für die zweite Drossel (13, 113) ein Elektromagnet vorgesehen ist.

3. Gerät nach Anspruch 1 oder 2, dadurch gekennzeichnet, daß die zweite Drossel (13) konzentrisch zur ersten Drossel (1) in dem Raum (10) angeordnet ist und längsverschiebbar ist.

4. Gerät nach Anspruch 3, dadurch gekennzeichnet, daß der Körper der zweiten Drossel (13) die Form einer Buchse hat, deren der ersten Drossel (1) zugewandtes Ende in der unwirksamen Stellung sich im Abstand von der ersten Drossel (1) befindet und in der wirksamen Stellung direkt an die Eintrittsöffnung der ersten Drossel (1) anschließt.

5. Gerät nach Anspruch 3, dadurch gekennzeichnet, daß der Körper der zweiten Drossel (113) die Form einer Düsennadel (113′) hat, die in der wirksamen Stellung der zweiten Drossel (113) zusammen mit der Eintrittsöffnung der ersten Drossel (101) die Drosselstelle bildet und in der unwirksamen Stellung diese Eintrittsöffnung freigibt.

6. Gerät nach einem der Ansprüch 1 bis 5, dadurch gekennzeichnet, daß der Verstellantrieb zusätzlich zu einem nur in einer Richtung eine Betätigungskraft erzeugenden Antriebselement wenigstens eine Feder (18) mit einer der Betätigungskraft des Antriebselementes entgegengesetzt gerichteten Kraft aufweist.

7. Gerät nach einem der Ansprüche 1 bis 6, dadurch gekennzeichnet, daß der längsverschiebbare Körper der zweiten Drossel (13, 113) in einen kolbenartigen Träger (12) eingesetzt ist, welcher, wenn die zweite Drossel (13) die Form einer Buchse hat, mit einem Kanal (20, 21) versehen ist, der die Eintrittsöffnung der zweiten Drossel (13) mit dem Raum (10) verbindet, und an dem der Verstellantrieb angreift.

8. Gerät nach Anspruch 7, dadurch gekennzeichnet, daß der Kanal (20, 21) in der Außenmantelfläche des kolbenartigen Trägers (12) mündet und zwischen der Außenmantelfläche des Träger (12) und der Innenmantelfläche des Raumes (10) ein für den Durchfluß des Schmiermittels ausreichender Zwischenraum (16) vor-

EP 0 351 579 B1

handen ist.

9. Gerät nach Anspruch 7 oder 8, dadurch gekennzeichnet, daß die erste Drossel (1, 101) und ein den Raum (10) mit dem Versorgungsanschluß verbindender Kanal (14) im Bereich des einen Endes dieses Raumes (10) vorgesehen sind und der kolbenartige Träger (12) vom anderen Ende her in den Raum (10) eingreift.

10. Gerät nach einem der Ansprüche 1 bis 9, dadurch gekennzeichnet, daß zumindest die eine der beiden Drosseln (1, 13; 101, 113) auswechselbar in ihren Träger (3, 12) eingesetzt ist.

11. Gerät nach einem der Ansprüche 1 bis 10, dadurch gekennzeichnet, daß die Drosseln (1, 13) mit einem Außengewinde zur Aufnahme in einer Gewindebohrung versehen sind.

## Claims

1. Device for dosing a lubricant independently of the supply pressure and viscosity, with a two-way flow regulator and at least two restrictors (1, 13; 101; 113) having different opening widths, associated therewith, whereof the restrictor (13;113) with the smaller opening width can be operated by means of an adjusting drive (17, 18) in series with the restrictor (1;101) having the greater opening width, the restrictor (1; 101) with the greatest opening width being disposed in a housing (3, 6) so that it connects the inlet opening of the two-way flow regulator to a chamber (10), from which a connecting channel (11) leads to a supply connection, and the inlet opening of the restrictor (13;113) of smaller opening width is likewise connected to the supply connection, characterised in that
   a) the inlet opening of the second restrictor (13;113) having the smaller opening width, is connected to the chamber (10),
   b) the second restrictor (13;113) comprises a member (13;113′) able to move by means of the adjusting drive (17, 18) relative to the first restrictor (1;101) towards its inlet opening and away therefrom, and
   c) in one position of the member (13;113′), in which the second restrictor (13;113) is inoperative, the inlet opening of the first restrictor (1;101) is connected directly to the chamber (10) arid in a position, in which the second restrictor (13;113) is operative, the inlet opening of the first restrictor (1;101) is connected by way of the second restrictor (13;113) to the chamber (10).

2. Device according to Claim 1, characterlsed in that a solenoid is provided as the adjusting drive for the second restrictor (13, 113).

3. Device according to Claim 1 or 2, characterised in that the second restrictor (13) is arranged concentrically with respect to the first restrictor (1) in the chamber (10) and is longitudinally displaceable.

4. Device according to Claim 3, characterised in that the member of the second restrictor (13) is in the shape of a bush, whereof the end facing the first restrictor (1) is located at a distance from the first restrictor (1) in the inoperative position and directly adjoins the inlet opening of the first restrictor (1) in the operative position.

5. Device according to Claim 3, characterised in that the member of the second restrictor (113) is in the shape of a jet needle (113′) which in the operative position of the second restrictor (113), together with the inlet opening of the first restrictor (101) forms the restriction point and in the inoperative position clears this inlet opening.

6. Device according to one of Claims 1 to 5, characterised in that in addition to a drive member producing an actuating force solely in one direction, the adjusting drive comprises at least one spring (18) with a force directed in opposition to the actuating force of the drive member.

7. Device according to one of Claims 1 to 6, characterised in that the longitudinally displaceable member of the second restrictor (13, 113) is inserted in a piston-like support (12), which, when the second restrictor (13) is in the shape of a bush, is provided with a channel (20, 21), which connects the inlet opening of the second restrictor (13) to the chamber (10) and on which the adjusting drive acts.

8. Device according to Claim 7, characterised in that the channel (20, 21) opens out in the outer surface of the piston-like support (12) and provided between the outer surface of the support (12) and the inner surface of the chamber (10) is an intermediate space (16) which is adequate for the throughflow of the lubricant.

9. Device according to Claim 7 or 8, characterised in that the first restrictor (1, 101) and a channel (14) connecting the chamber (10) to the supply connection are provided in the region of one end of this chamber (10) and the piston-like support (12) engages in the chamber (10) from the other end.

10. Device according to one of Claims 1 to 9, characterised in that at least one of the two restrictors (1, 13; 101, 113) is exchangeably inserted in its support (3, 12).

11. Device according to one of Claims 1 to 10, characterised in that the restrictors (1, 13) are provided with an external thread to be received in a threaded bore.

**Revendications**

1. Dispositif pour doser un lubrifiant indépendamment de la pression d'alimentation et de la viscosité qui comporte un régulateur de débit à deux voies et, au moins, deux éléments d'étranglement associés à celui-ci (1, 13;101;113) ayant des sections libres différentes, dont celui (13, 113) ayant une plus petite section libre monté en série avec l'élément d'étranglement présentant une plus grande section libre (1; 101) peut être commuté au moyen d'un dispositif de réglage (17, 18), cependant que l'élément d'étranglement (1; 101) ayant la plus grande section libre est monté dans une enveloppe (3,6) de telle manière qu'il relie l'ouverture d'entrée du régulateur de débit à deux voies avec une chambre (10), d'où part un canal de liaison (11) aboutissant à un raccord d'alimentation, l'orifice d'entrée de l'élément d'étranglement (13; 113) ayant une plus petite section libre est également en communication avec le raccord d'alimentation,
caractérisé en ce que :
   a) l'orifice d'entrée du second élément d'étranglement, qui présente une plus petite section libre (13; 113) communique avec la chambre (10);
   b) le second élément d'étranglement (13; 113) comporte une pièce (13; 113′) pouvant être déplacée au moyen d'un dispositif de réglage (17, 18) de façon à l'approcher et à l'éloigner de son orifice d'entrée;
   c) dans la position de la pièce (13; 113′) dans laquelle le second élément d'étranglement (13; 113) est inopérant, l'orifice d'entrée du premier élément d'étranglement communique directement avec la chambre (10), tandis que dans la position dans laquelle le second élément d'étranglement (13;113) est opérant, l'orifice d'entrée du premier élément d'étranglement (1; 101) communique avec la chambre (10) par l'intermédiaire du second élément d'étranglement (13;113).

2. Dispositif selon la revendication 1, caractérisé en ce que le dispositif de réglage du second élément d'étranglement (13, 113) est un électro-aimant.

3. Dispositif selon la revendication 1 ou 2, caractérisé en ce que le second élément d'étranglement (13) est monté dans la chambre (10) concentriquement au premier élément d'étranglement (1) et est mobile longitudinalement.

4. Dispositif selon la revendication 3, caractérisé en ce que le corps du second élément d'étranglement (13) présente la forme d'une boîte dont l'extrémité tournée vers le premier élément d'étranglement (1) en est espacée dans sa position inactive, tandis que dans sa position active il se raccorde directement à l'orifice d'entrée du premier élément d'étranglement (1).

5. Dispositif selon la revendication 3, caractérisé en ce que le corps du second élément d'étranglement (113) présente la forme d'une aiguille ou d'un pointeau (113′) qui, dans la position active du second élément d'étranglement (113) forme, conjointement avec le premier élément d'étranglement (101), le point d'étranglement, tandis que dans sa position inactive il laisse ouverte cette ouverture d'entrée.

6. Dispositif selon l'une quelconque des revendications 1 à 5, caractérisé en ce que le dispositif de réglage comporte, en plus d'un élément d'actionnement ne développant une certaine force d'actionnement que dans une seule direction, au moins, un ressort (18) dont la force est orientée à l'opposée de celle dudit élément d'actionnement.

7. Appareil selon l'une quelconque des revendications 1 à 8, caractérisé en ce que l'élément mobile dans le sens longitudinal du second élément d'étranglement (13, 113) est inséré dans un support en forme de piston (12) qui, lorsque le second élément d'étranglement présente la forme d'une boîte, comporte un canal qui relie l'orifice d'entrée du second élément d'étranglement (13) avec la chambre (10) et contre lequel opère le dispositif de réglage.

8. Appareil selon la revendication 7, caractérisé en ce que le canal (20, 21) débouche dans la surface extérieure du support en forme de piston (12), tandis que, entre la surface extérieure du support (12) et la surface intérieure de la chambre (10) l'intervalle (16) est suffisamment grand pour permettre au lubrifiant de circuler.

9. Appareil selon la revendication 7 ou 8, caractérisé en ce que le premier étranglement (1,101) et un canal (14) reliant le raccord d'alimentation à la chambre (10) sont prévus au voisinage de l'une des extrémités de ladite chambre (10) et en ce que le support (12), en forme de piston, s'engage dans la chambre (10) par l'autre extrémité.

10. Appareil selon l'une quelconque des revendications 1 à 9, caractérisé en ce que l'un, au moins, des deux étranglements (1,13; 101, 113) est monté de façon remplaçable dans son support (3, 12).

11. Appareil selon l'une quelconque des revendications 1 à 10, caractérisé en ce que les étranglements (1, 13) comportent un filetage extérieur afin de pouvoir être vissé dans un trou fileté.

Fig.1

Fig.2

Fig.3